# EUROPÄISCHE PATENTSCHRIFT

(11) **EP 0 578 130 B1**
(45) Veröffentlichungstag und Bekanntmachung des Hinweises auf die Patenterteilung: **21.08.1996**
(21) Anmeldenummer: 93110498.8
(22) Anmeldetag: 01.07.1993
(51) Int. Cl.: F16C 32/06, F16C 29/02

(54) **Aerostatische Miniaturlager**
Aerostatic microbearing
Palier miniature aérostatique

(30) Priorität: 06.07.1992 DE 4222140
(43) Veröffentlichungstag der Anmeldung: 12.01.1994
(73) Patentinhaber: Heinzl, Joachim, Prof. Dr.-Ing., D-81549 München (DE)
(72) Erfinder: Heinzl, Joachim, Prof. Dr.-Ing, W-8000 München 90 (DE); Runge, Wolfram, Dr.-Ing., W-8000 München 40 (DE)

(56) Entgegenhaltungen:
- EP-A- 0 178 596
- EP-A- 0 204 099
- DE-A- 3 627 771
- DE-C- 3 439 648
- US-A- 4 169 008
- US-A- 4 470 875
- US-A- 4 697 933
- US-A- 5 110 520
- Heinzl, J.; Zehentbauer H.: Neue Ergebnisse bei der Entwicklung aerostatische Lager. Feinwerktechnik und Messtechnik 98 (1990) 10: 431-435
- Kowanz, B. u.a.: Linear Driving Device for Micro-Actuators. Techn. Dig. Micromechanics Europe 1990, Berlin 26.-27.11.1992
- Faucherre, M; Koehler, B.: Delay Lines of the VLT Interferometer: Current Status, ESO, The Messenger No. 67, 1992

## Beschreibung

Gegenstand der Erfindung sind aerostatische Miniaturlager zur Lagerung und Führung von bewegten Teilen. Dabei soll insbesondere das Problem gelöst werden, aerostatische Lagerungen mit genau definierter Geometrie der Lagerflächen und Düsen zur Einspeisung der Luft mit genau definierten Drosseleigenschaften zu erzeugen. Die aerostatischen Lager sollen ermöglichen, bewegte Maschinenteile und mikromechanische Elemente mit höchster Genauigkeit zu führen sowie eine große Steifigkeit der Lagerung zu erzielen. Dies setzt voraus, daß es gelingt, an den Düsen und im Lagerspalt laminare Strömung zu erzielen und Turbulenz zu vermeiden. Turbulenzen in der Strömung bilden sich als Störbeschleunigung in Form von Rauschen im Bereich von einigen kHz ab.

In dem Buch von Bartz W. J.: Luftlagerungen, Esslingen, Expert-Verlag 1982 sind verschiedene Luftlagerungen beschrieben.

Bisher werden Luftlagerungen beispielsweise dadurch hergestellt, daß in die metallische Lagerfläche Bohrungen eingebracht werden und in diese Bohrungen Uhrensteine eingesetzt werden, die die Drosselfunktion ausüben. Die Drosselfunktion wird oft auch durch direkt in das Metall gebohrte Düsen erzielt.

Ein anderes Herstellungsverfahren besteht darin, das gelagerte Element oder das feststehende Teil der Lagerung aus gesintertem Metall auszuführen und durch einen Walzvorgang und anschließendes Überfräsen mit einem Diamantwerkzeug die Mikrodüsen und die geometrische Gestalt der Lagerfläche herzustellen. Derartige Luftlagerungen sind in der DE-C-34 39 648 beschrieben.

Im Gegensatz dazu werden erfindungsgemäß aerostatische Miniaturlager vorgeschlagen, bei denen mindestens eine-der beiden Lagerflächen aus monokristallinem Silizium gebildet wird in das die Düsen durch anisotropes Ätzen eingebracht sind. Dadurch werden Lagerflächen möglich, deren Welligkeit und Rauhheit im Bereich von Nanometern liegen. Durch eine feste Verbindung mit einem starren Stützkörper läßt sich die Steifigkeit des dünnen Siliziumchips steigern, z.B. durch Aufbringen auf einen Glaskörper. Durch die flächige Verteilung einer Vielzahl von exakt definierten Düsen wird es möglich, turbulente Strömung zu vermeiden. Durch die Geometrie der Düsen mit dem engsten Querschnitt unmittelbar beim Austritt der Luft in den Lagerspalt wird schädliches Totvolumen, auch Kammervolumen genannt, optimal reduziert, so daß dynamisch steife und gegen selbsterregte Schwingungen stabile Lager entstehen.

Durch die hohe Oberflächenqualität der Lagerfläche werden bei entsprechender Gegenfläche Spalthöhen bis herab zu 100 nm möglich. Solche geringen Spalthöhen werden bisher nur bei aerodynamischen Lagern, wie z.B. bei den Flugkörpern der Schreibleseköpfe von Magnetplattenspeicher-Laufwerken erzielt. Während dort Relativgeschwindigkeiten von 10 m/s und mehr erforderlich sind, um das nötige laminare Luftpolster aufzubauen, können die vorgeschlagenen Lager diese Spalthöhe auch ohne Relativgeschwindigkeit stabil halten.

In der EP-A-0 178 596 sind Düsen für einen Tintenstrahldrucker beschrieben. Diese Düsen werden durch anisotropes Ätzen in ein Substrat aus monokristallinem Silizium eingebracht. Ein aerostatisches Miniaturlager mit derartigen Düsen ist nicht angegeben.

Die Erfindung ist an Hand von sieben Figuren veranschaulicht, es stellt dar
- Fig. 1: Anisotrop geätzte Mikrodüse in 100-Silizium
- Fig. 2: Anisotrop geätzte Mikrodüse in 110-Silizium
- Fig. 3: Mit Ätzstoppschicht hergestellte Mikrodüsen
- Fig. 4: Luftlagerelemente mit vielen Mirkrodüsen
- Fig. 5: Selbsteinstellende Stützkonstruktion mir Luftlagerelement
- Fig. 6: Linearführung mit sechs selbsteinstellenden Lagerelementen
- Fig. 7: Linearführung aus anisotrop geätztem Silizium

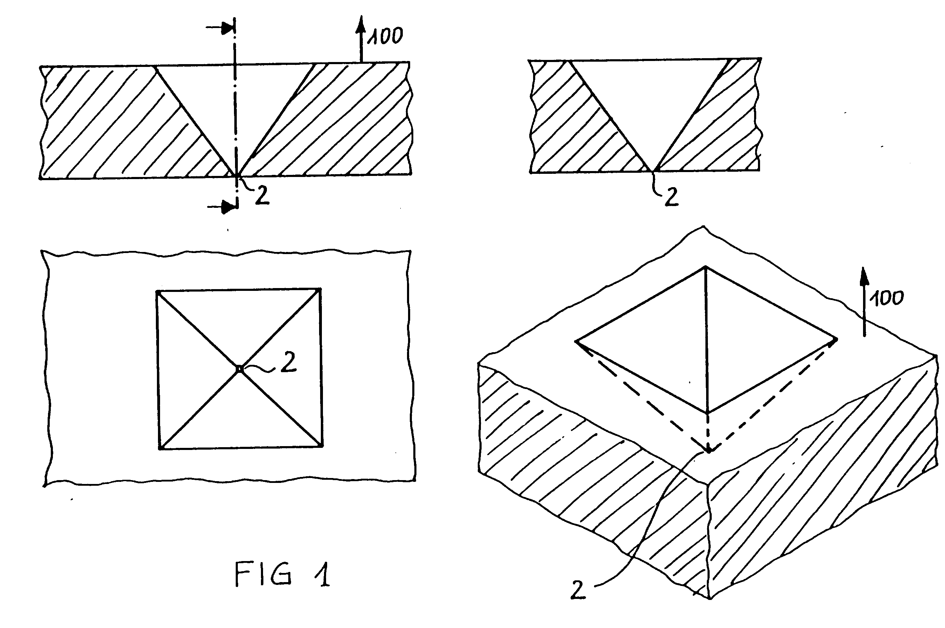

In Fig. 1 ist eine mikromechanisch in 100-Silizium hergestellte Mikrodüse dargestellt. Durch eine geeignete Maskierung und photolithographische Technik werden pyramidenförmige Durchbrüche durch den Siliziumwafer erzeugt, so daß die engste Stelle des Durchbruches die Düse 2 bildet. Diese Düse ist dem Luftlagerspalt zugewandt.

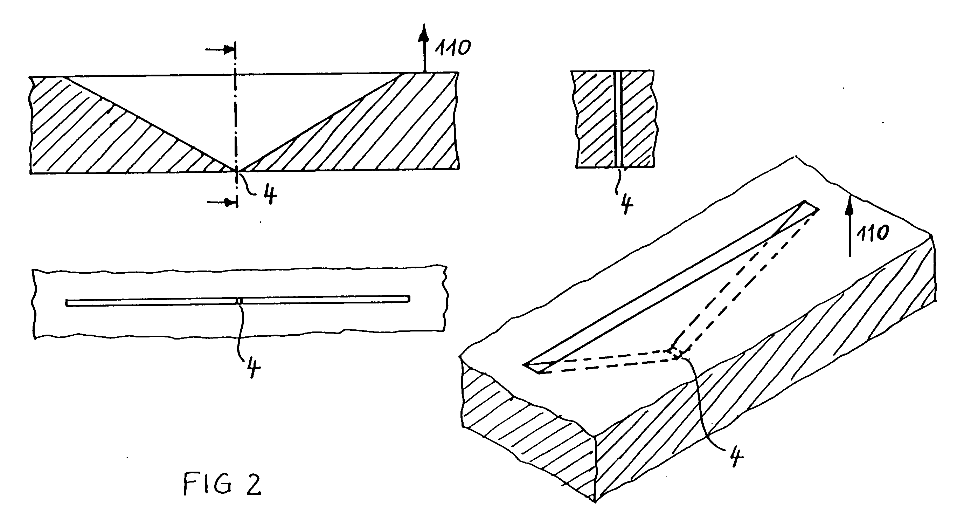

In Fig. 2 ist eine mikromechanisch in 110-Silizium hergestellte Mikrodüse dargestellt. Durch eine geeignete Maskierung und photolithographische Technik werden keilförmige Durchbrüche durch den Siliziumwafer erzeugt, so daß die engste Stelle des Durchbruches die Düse 4 entsteht. Diese Düse ist dem Luftlagerspalt zugewandt.

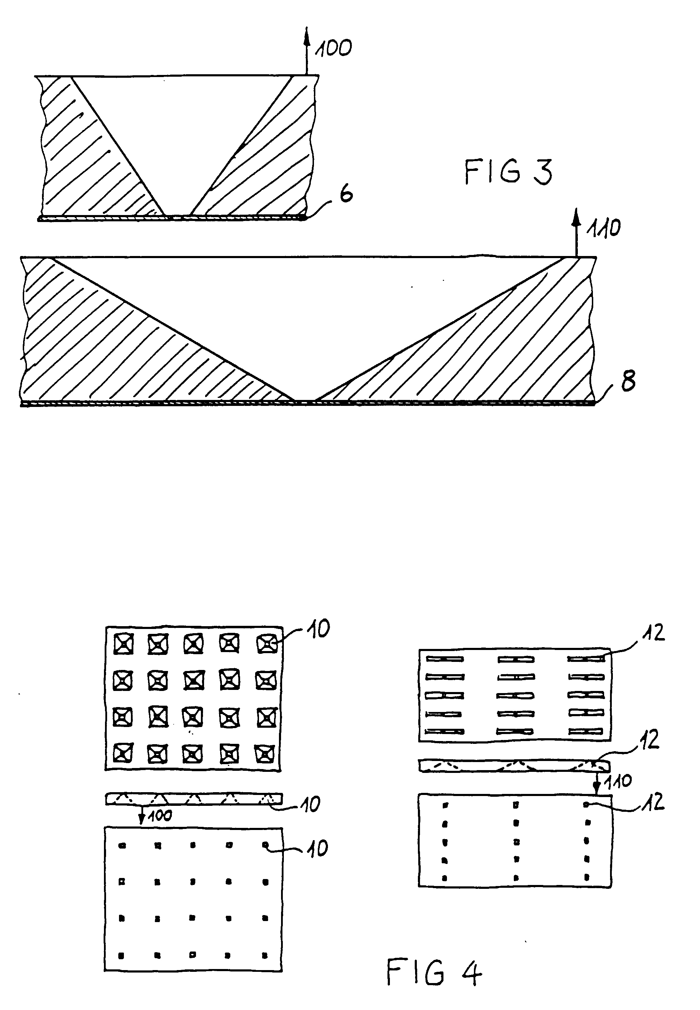

In Fig. 3 bezeichnet 6 eine Ätzstoppschicht auf 100-Silizium, 8 bezeichnet ein Ätzstoppschicht auf 110-Silizium. Durch solche Schichten, z.B. durch bordotierte Oberflächenschichten, kann das anisotrope Ätzen gestoppt werden. In die verbleibende Membran können anschließend durch photolithographische Maskierung und anschließendes Ätzen genau definierte Düsen eingebracht werden.

In Fig. 4 bezeichnet 10 eine Mikrodüse in 100-Silizium, 12 bezeichnet eine Mikrodüse in 110-Silizium. Durch die Anordnung vieler mikromechanisch hergestellter Düsen auf einem Siliziumchip können Lagerelemente gebildet werden, die große Tragkraft und Steifigkeit aufweisen. Die Elemente müssen auf eine Trägerstuktur aufgebracht werden, durch die jede einzelne Düse mit Luft versorgt wird.

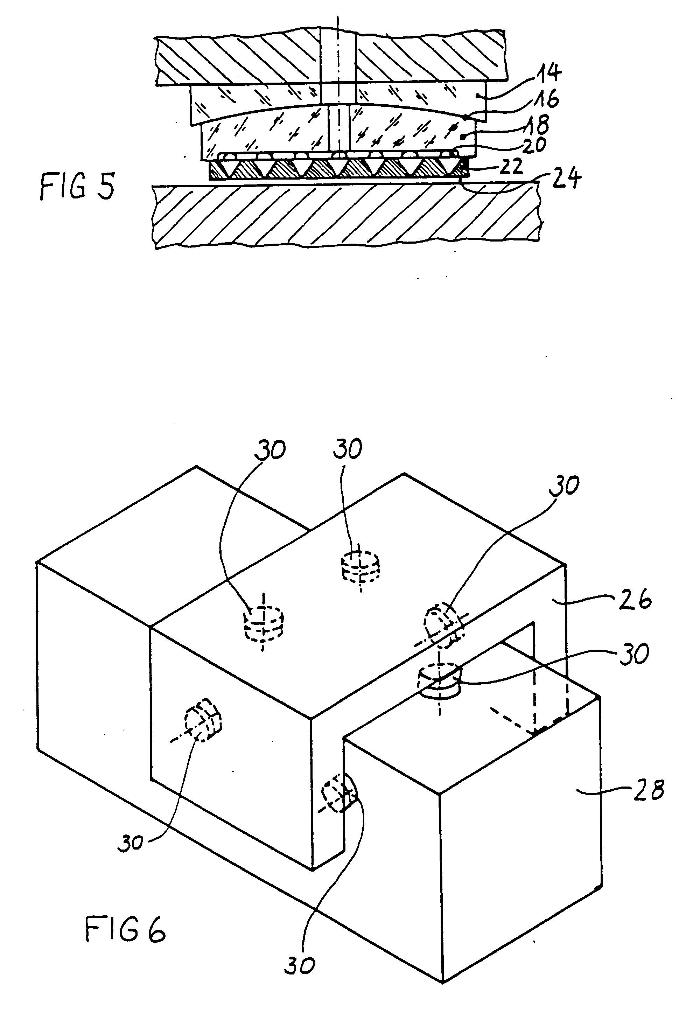

In Fig. 5 bezeichnet 22 ein mikromechanisch hergestelltes Luftlagerelement, das von einer selbsteinstellenden Stützkonstruktion getragen wird. Das Luftlagerelement 22, das mit einer Vielzahl von Mikrodüsen versehen ist, ist z.B. durch Anodisches Bonden mit dem Stützkörper 18 aus Glas verbunden. In den Stützkörper sind durch Photolithographie und einen Ätzprozeß Versorgungskanäle 20 für die Luft eingebracht, so daß jede Düse mit Luft versorgt wird. Der Stützkörper 18 ist über eine sphärische Kontaktfläche 16 mit dem Gegenstück 14 verbunden, wodurch sich Stützkörper mit Lagerelement so einstellen oder eingestellt werden können, daß sich ein paralleler Luftspalt 24 ergibt. Wenn die Einstellung erfolgt ist, kann diese Justierung durch die Aushärtung eines Klebstoffes, der sich in der sphärischen Kontaktfläche 16 befindet, fixiert werden. Die Zufuhr der Luft in die Verteilungskanäle 20 erfolgt durch zentrale Bohrungen in Stützkörper 18 und Gegenstück 14, die auch nach der Justage und Fixierung den Luftdurchtritt gewähren.

In Fig. 6 bezeichnet 28 einen feststehenden, quaderförmigen Balken aus Metall, Glas, Granit oder Glaskeramik (Zerodur). Darauf sitzt ein Schlitten 26, die sich mit sechs selbsteinstellenden Luftlagerelementen 30 auf dem Balken abstützt. Durch die selbsteinstellende Eigenschaft der Lagerelemente können Führungen höchster Genauigkeit mit geringem Justieraufwand hergestellt werden.

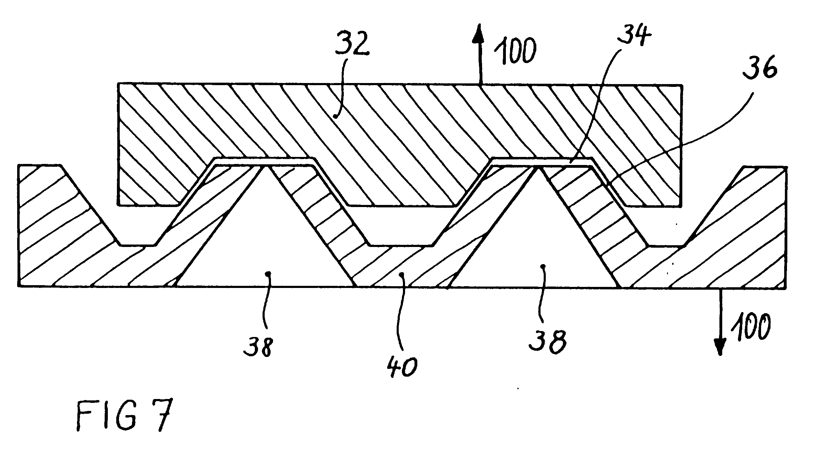

In Fig. 7 bezeichnet 40 das Bett einer mikromechanische Linearführung. 32 bezeichnet den bewegten Schlitten der Linearführung. Schlitten 32 und Bett 40 sind aus 100-Silizium durch anisotropes Ätzen hergestellt. Der Schlitten 32 wird vom Bett 40, das eine entsprechende Gestalt aufweist, so geführt, daß er nur eine Linearbewegung ausführen kann. Die flächig verteilten Mikrodüsen sind auf 2 Reihen aufgeteilt, in denen die Düsen möglichst eng nebenenander angeordnet sind. Durch diese anisotrop geätzten Düsen 38 tritt Luft in den horizontalen Lagerspalt 34, in dem dadurch Überdruck herrscht. Die Luft strömt durch den geneigten, parallelen Lagerspalt 36 ab, der eine Höhe von ca. 100 nm hat. Durch den Herstellungsprozess des anisotropen Ätzens sind die geneigten Lagerspalte 36 sehr genau und eben, so daß mit dieser Führung reproduzierbare Linearbewegungen mit einer Genauigkeit von einem Nanometer erzielbar sind. Der horizontale Lagerspalt 34, der bei der Herstellung nicht so genau gefertigt werden kann, hat deshalb eine größere Höhe. Eine solche Linearführung könnten mit integrierten mikromechanischen Linear-Aktoren angetrieben werden.

Im Vergleich zum bisher Bekannten stellt die Erfindung einen mehrfachen technischen Fortschritt dar, da sie es ermöglicht, Lagerungen herzustellen, die insbesondere in der Mikrotechnik zwei wesentliche Funktionen erfüllen. Dies ist zum einen die Lagerung von bewegten Mikrostuktur-Elementen. Neuere Arbeiten mit flächig verteilten Mikrodüsen haben gezeigt, daß nur Luftlagerungen ohne Totvolumen und ohne Strömungstubulenzen ohne mechanisches Rauschen arbeiten. Zum Erzielen dieser Lagereigenschaft sind die aerostatischen Miniaturlager besonders gut geeignet. Die Erfindung ermöglicht es, Luftlagerungen so genau herzustellen, daß mikromechanische Bauteile gelagert werden können, ohne daß Verschleiß entsteht. Des Weiteren können genaue Führungen im Nanometer-Bereich gebaut werden. Mit der Rastertunnel-Mikroskopie können Oberflächen in atomarem Maßstab vermessen werden. Dazu bedarf es der genauen und reproduzierbaren Bewegung einer Tunnel-Elektrode relativ zum Meßobjekt. Diese genauesten Bewegungen werden bisher ausschließlich mit piezoelektrischen Aktoren erzeugt. Diese keramischen Elemente, die sich unter der Wirkung eines elektrischen Feldes zusammenziehen oder ausdehnen, sind in ihrer Leistungsfähigkeit begrenzt. Einerseits sind die Bewegungshübe begrenzt, andererseits ist die Linearität nur bei geringen Auslenkungen gegeben. So ist die abtastbare Fläche bei kommerziellen Mikroskopen auf 20µm x 20µm begrenzt. Mit genauesten Luftlagerungen, die mikromechanisch hergestellt werden sollen, erscheint es möglich, kleinste Linearführungen zu bauen, und sie durch Mikroaktoren anzutreiben. Die Führungen würden es ermöglichen, einen beträchtlich größeren Bereich mit Rastertunnelmikoskopen abzutasten. Auch andere Meßverfahren der Mikrotopographie (z.B. Interferenzmikroskop), erreichen ihre Genauigkeit im Nanometerbereich nur durch entsprechend genaue Führungen. Auch für mikrooptische Systeme wäre eine solche extrem genaue Führung verwendbar, die optische Elemente, wie z.B. Tripelspiegel, hochgenau linear verschieben könnte.

## Patentansprüche

1. Aerostatisches Miniaturlager, mit mindestens einer Mikrodüse (2, 4, 10, 12, 38) in einer Lagerfläche (22, 40), die mit einer weiteren Lagerfläche (40, 22) zusammenwirkt, dadurch gekennzeichnet, daß mindestens eine der beiden Lagerflächen (22, 40) aus monokristallinem Silizium gebildet ist, in das die mindestens eine Mikrodüse (2, 4, 10, 12, 38) durch anisotropes Ätzen eingebracht ist.

2. Aerostatisches Miniaturlager nach Anspruch 1, dadurch gekennzeichnet, daß in der Lagerfläche (22, 40) die Mikrodüsen (2, 4, 10, 12, 38) flächig verteilt angeordnet sind.

3. Aerostatisches Miniaturlager nach Anspruch 1 oder 2, dadurch gekennzeichnet, daß monokristallines Silizium der Ausrichtung 100 benutzt wird und die Maskierung so erfolgt, daß pyramidenförmige Durchbrüche entstehen, die durch lll-Kristallebenen begrenzt sind, wobei die etwas abgeflachte Spitze des pyramidenförmigen Durchbruchs die Mikrodüse (2, 10, 38) darstellt, die zum Lagerspalt weist.

4. Aerostatisches Miniaturlager nach Anspruch 1 oder 2, dadurch gekennzeichnet, daß monokristallines Silizium der Ausrichtung 110 benutzt wird und die Maskierung so erfolgt, daß keilförmige Durchbrüche entstehen, die durch 111-Kristallebenen begrenzt sind, und die Mikrodüse (12) in der Keilspitze entsteht, die zum Lagerspalt weist.

5. Aerostatisches Miniaturlager nach Anspruch 1 oder 2, dadurch gekennzeichnet, daß die genauen Abmessungen der Mikrodüse (10, 12) durch einen strukturierten Ätzstopp (6, 8) erhalten werden.

6. Aerostatisches Miniaturlager nach Anspruch 1 oder 2, dadurch gekennzeichnet, daß auch die zweite Lagerfläche aus monokristallinem Silizium besteht und beide Lagerflächen durch anisotropes Ätzen prismatisch geformt sind, so daß sie nur eine Translation zulassen.

7. Aerostatisches Miniaturlager nach Anspruch 1 oder 2, dadurch gekennzeichnet, daß der die Lagerfläche mit den Mikrodüsen bildende Siliziumchip (22) mit den Mikrodüsen auf einen Stützkörper (18) aufgebracht ist, der gleichzeitig eine Öffnung zur Einspeisung der Luft und Kanäle (20) zur Verteilung der Luft auf die Durchbrüche im Silizium, die zu den Mikrodüsen führen, aufweist.

8. Aerostatisches Miniaturlager nach Anspruch 7, dadurch gekennzeichnet, daß der Stützkörper (18) aus Glas besteht, die Verteilerkanäle (20) durch Ätzen eingebracht sind und die Verbindung zwischen Stützkörper (18) und Siliziumchip (22) durch anodisches Bonden hergestellt ist.

9. Aerostatisches Miniaturlager nach Anspruch 8, dadurch gekennzeichnet, daß die Rückseite des Stützkörpers (18) sphärisch gekrümmt ist, und in ein Gegenstück (14) so eingepaßt ist, daß die Luftzufuhr durch Stützkörper (18) und Gegenstück (14) erfolgen kann und sich ein Kugelgelenk ergibt, so daß sich das Lager selbst ausrichten kann.

10. Aerostatisches Miniaturlager nach Anspruch 9, dadurch gekennzeichnet, daß die Beweglichkeit zwischen Stützkörper (18) und Gegenstück (14) beseitigt wird, wenn sich das Lager selbst ausgerichtet hat und so die Ausrichtung fixiert wird.

11. Aerostatische Miniaturlager nach Anspruch 6, dadurch gekennzeichnet, daß die Lagerflächen eine mikromechanische Führung bilden, in die ein mikromechanischer Aktor integriert ist, der die Linearbewegung antreibt.

## Claims

1. Aerostatic miniature bearing, with at least one microjet (2, 4, 10, 12, 38) in a bearing surface (22, 40) which cooperates with a further bearing surface (40, 22), characterised in that at least one of the two bearing surfaces (22, 40) is formed from monocrystalline silicon into which the at least one microjet (2, 4, 10, 12, 38) is incorporated by anisotropic etching.

2. Aerostatic miniature bearing according to claim 1, characterised in that in the bearing surface (22, 40) the microjets (2, 4, 10, 12, 38) are arranged in planar distribution.

3. Aerostatic miniature bearing according to claim 1 or 2, characterised in that monocrystalline silicon of orientation 100 is used, and masking takes place in such a way that pyramidal apertures which are defined by 111 crystal planes are formed, wherein the slightly flattened apex of the pyramidal aperture forms the microjet (2, 10, 38) which points towards the bearing gap.

4. Aerostatic miniature bearing according to claim 1 or 2, characterised in that monocrystalline silicon of orientation 110 is used, and masking takes place in such a way that wedge-shaped apertures which are defined by 111 crystal planes are formed, and the microjet (12) is formed in the wedge apex which points towards the bearing gap.

5. Aerostatic miniature bearing according to claim 1 or 2, characterised in that the exact dimensions of the microjet (10, 12) are obtained by a structured etch stop (6, 8).

6. Aerostatic miniature bearing according to claim 1 or 2, characterised in that the second bearing surface too is made of monocrystalline silicon and the two bearing surfaces are prismatically shaped by anisotropic etching, so that they allow only one translation.

7. Aerostatic miniature bearing according to claim 1 or 2, characterised in that the silicon chip (22) with the microjets forming the bearing surface with the microjets is mounted on a supporting body (18) which simultaneously comprises an opening for the supply of air and channels (20) for distributing the air to the apertures in the silicon which lead to the microjets.

8. Aerostatic miniature bearing according to claim 7, characterised in that the supporting body (18) is made of glass, the distributor channels (20) are formed by etching, and the connection between supporting body (18) and silicon chip (22) is made by anodic bonding.

9. Aerostatic miniature bearing according to claim 8, characterised in that the rear side of the supporting body (18) is spherically curved, and fitted in a companion part (14) in such a way that air supply can take place through supporting body (18) and companion part (14) and a ball joint is formed, so that the bearing can align itself.

10. Aerostatic miniature bearing according to claim 9, characterised in that mobility between supporting body (18) and companion part (14) is eliminated when the bearing has aligned itself and so the alignment is fixed.

11. Aerostatic miniature bearing according to claim 6, characterised in that the bearing surfaces form a micromechanical guide in which is integrated a micromechanical actuator which drives the linear movement.

## Revendications

1. Palier miniature aérostatique avec au moins une microbuse (2, 4, 10, 12, 38) dans une surface (22, 40) de palier qui coopère avec une autre surface (40, 22) de palier, caractérisé en ce qu'au moins l'une des deux surfaces (22, 40) de palier est formée de silicium monocristallin, dans lequel la microbuse (2, 4, 10, 12, 38), au nombre d'au moins une, est réalisée par attaque anisotrope.

2. Palier miniature aérostatique selon la revendication 1, caractérisé en ce que les mircobuses (2, 4, 10, 12, 38) sont réparties dans la surface (22, 40) du palier.

3. Palier miniature aérostatique selon la revendication 1 ou 2, caractérisé en ce que l'on utilise du silicium monocristallin d'orientation 100 et on réalise le masquage de manière à obtenir des passages en forme de pyramides qui sont délimités par des plans d'orientation 111, la pointe légèrement aplatie du passage en forme de pyramide constituant la microbuse (2, 10, 38) tournée vers l'interstice du palier.

4. Palier miniature aérostatique selon la revendication 1 ou 2, caractérisé en ce que l'on utilise du silicium monocristallin d'orientation 110 et on réalise le masquage de manière à obtenir des passages en forme de coins qui sont délimités par des plans d'orientation 111, la microbuse (12) tournée vers l'interstice du palier étant formée dans la pointe du coin.

5. Palier miniature aérostatique selon la revendication 1 ou 2, caractérisé en ce que les dimensions précises de la microbuse (10, 12) sont obtenues au moyen d'une barrière (6, 8) d'attaque structurée.

6. Palier miniature aérostatique selon la revendication 1 ou 2, caractérisé en ce que la deuxième surface de palier est également en silicium monocristallin et les deux surfaces de palier ont une conformation en prisme obtenue par attaque anisotrope, de telle sorte que les deux surfaces de palier permettent seulement une translation.

7. Palier miniature aérostatique selon la revendication 1 ou 2, caractérisé en ce que la plaquette (22) de silicium constituant la surface de palier avec les microbuses est appliquée sur un support (18) qui comporte simultanément une ouverture d'alimentation en air et des canaux (20) d'amenée de l'air aux passages dans le silicium, lequels canaux mènent aux microbuses.

8. Palier miniature aérostatique selon la revendication 7, caractérisé en ce que le support (18) est en verre, les canaux d'amenée d'air (20) sont réalisés par attaque chimique et la liaison entre le support (18) et la plaquette de silicium (22) est obtenue par collage anodique.

9. Palier miniature aérostatique selon la revendication 8, caractérisé en ce que la face arrière du support (18) présente une conformation sphérique et est ajustée dans une contre-pièce (14) de manière à permettre l'arrivée d'air à travers le support (18) et la contre-pièce (14) et à former une articulation sphérique permettant l'alignement automatique du palier.

10. Palier miniature aérostatique selon la revendication 9, caractérisé en ce que la mobilité entre le support (18) et la contre-pièce (14) est supprimée lorsque le palier s'est aligné de manière automatique et qu'ainsi l'alignement est conservé.

11. Palier miniature aérostatique selon la revendication 6, caractérisé en ce que les surfaces de palier constituent une glissière de micromécanique dans laquelle est intégré un micro-actionneur qui assure le déplacement linéaire.
